Europäisches Patentamt

European Patent Office

Office européen des brevets

(19)

(11) **EP 0 936 351 B1**

(12) **EUROPÄISCHE PATENTSCHRIFT**

(45) Veröffentlichungstag und Bekanntmachung des Hinweises auf die Patenterteilung:
**21.07.2004 Patentblatt 2004/30**

(51) Int Cl.[7]: **F02D 41/14**, F02D 41/26, G05B 13/04

(21) Anmeldenummer: **99102910.9**

(22) Anmeldetag: **12.02.1999**

(54) **Verfahren und Einrichtung zur Optimalwertsteuerung eines Regelgegenstandes mit lernfähiger Steuerlogik**

Method and apparatus to control at optimal values a control object using a learning control logic

Méthode et dispositif de commande à valeur optimale d'un objet de commande à l'aide d'une commande à apprentisage

(84) Benannte Vertragsstaaten:
**DE FR GB IT**

(30) Priorität: **12.02.1998 JP 2989598**

(43) Veröffentlichungstag der Anmeldung:
**18.08.1999 Patentblatt 1999/33**

(73) Patentinhaber: YAMAHA HATSUDOKI KABUSHIKI KAISHA
Iwata-shi Shizuoka-ken, 438 (JP)

(72) Erfinder: **Yoko, Fujime**
Iwata-Shi,Shizuoka-ken,438 (JP)

(74) Vertreter: **Grünecker, Kinkeldey, Stockmair & Schwanhäusser Anwaltssozietät**
**Maximilianstrasse 58**
**80538 München (DE)**

(56) Entgegenhaltungen:
EP-A- 0 326 065    EP-A- 0 594 318
EP-A- 0 724 073

- **PATENT ABSTRACTS OF JAPAN vol. 1998, no. 05, 30. April 1998 (1998-04-30) & JP 10 027008 A (YAMAHA MOTOR CO LTD), 27. Januar 1998 (1998-01-27) -& US 5 925 089 A (FUJIME YOKO) 20. Juli 1999 (1999-07-20)**
- **PATENT ABSTRACTS OF JAPAN vol. 1998, no. 10, 31. August 1998 (1998-08-31) & JP 10 122017 A (YAMAHA MOTOR CO LTD), 12. Mai 1998 (1998-05-12) -& US 5 954 783 A (YAMAGUCHI MASASHI ET AL) 21. September 1999 (1999-09-21)**
- **HITOSHI SHIRAISHI ET AL: "CMAC NEURAL NETWORK CONTROLLER FOR FUEL-INJECTION SYSTEMS" IEEE TRANSACTIONS ON CONTROL SYSTEMS TECHNOLOGY,US,IEEE INC. NEW YORK, Bd. 3, Nr. 1, 1. März 1995 (1995-03-01), Seiten 32-38, XP000508608 ISSN: 1063-6536**
- **HIROSHI INAGAKI ET AL: "AN ADAPTIVE FUEL INJECTION CONTROL WITH INTERNAL MODEL IN AUTOMOTIVE ENGINES", PROCEEDINGS OF THE ANNUAL CONFERENCE OF THE INDUSTRIAL ELECTRONICS SOCIETY. (IECON),US,NEW YORK, IEEE, VOL. CONF. 16, PAGE(S) 78-83 XP000217101 ISBN: 0-87942-600-4 * das ganze Dokument ***

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft eine Steuervorrichtung und ein Verfahren zur Steuerung einer Brennkraftmaschine

Bisher wurden auf verschiedenen technischen Gebieten Optimalwertsteuerungen in Vorwärtsregelung (feedforward controls), Regelung mit Störgrößenaufschaltung vorgeschlagen, die zur Regelung des Regelgegenstands ein Modell des Regelgegenstands verwenden, um den Regelgegenstand der Eingabe entsprechend auf einen bestimmten Wert zu stellen. Mit solch einem Modellverfahren kann die Reaktion der Regelung auf Änderungen der Eingabe verbessert werden, wodurch sich der Regelgegenstand in einen optimalen Zustand stellen lässt, doch durch alterungsbedingte Änderungen des Regelgegenstands selbst, oder durch Änderungen der Betriebsumgebung kann es zu einer Abweichung des vorab erstellten Modell vom realen Regelgegenstand kommen, weshalb bei Bedarf eine Korrektur dieser Abweichung notwendig ist. Als Verfahren zur Korrektur dieser Modellabweichung ist eine Lernmethode bekannt, die die Ausgabe des realen Regelgegenstands rückkoppelt und anhand dieser rückgekoppelten Werte eine Korrektur durchführt, wobei auf der Basis der Korrekturmenge bei stabiler Rückkopplung Lerndaten erzeugt werden.

Mit der obigen, auf Messwerten basierenden Lernmethode lassen sich Lerndaten aus der realen Ausgabe des Regelgegenstands erzeugen, was die genaue Erfassung der Abweichung des Modells vom Regelgegenstand erlaubt und ein präzises Lernen ermöglicht. Doch das erste Problem besteht jedoch darin, dass Zeit vergeht, bis die Rückkopplung sich stabilisiert hat und Lerndaten gewonnen werden können. Das zweite Problem besteht darin, dass, um Lerndaten aus der Rückkopplung zu gewinnen, der Regelgegenstand unabhängig von seinem realen Betriebszustand und seiner Betriebsumgebung in einen Regelzustand zur Gewinnung von Lerndaten gebracht werden muss, und dass dieser Zustand zudem so lange beibehalten werden muss, bis die Rückkopplung sich stabilisiert hat, weshalb es sehr schwer ist, vom realen Betriebszustand des Regelgegenstands ausgehend zufriedenstellende Lerndaten zu gewinnen, ohne die Stellgröße des Regelgegenstands zu beeinflussen.

Aus EP-A- 0 326 065 ist eine Kraftstoffeinspritzsteuerung für eine Brennkraftmaschine bekannt. Zur Vermeidung der Bereitstellung von Fluss- und Drucksensoren werden die entsprechenden Parameter basierend auf anderen gemessenen Parametern der Brennkraftmaschine geschätzt. Zur Verbesserung der Schätzgenauigkeit werden die geschätzten Parameter basierend auf Daten der Brennkraftmaschinen korrigiert, die in LUT-Tabellen gespeichert sind. Die vorab gespeicherten Brennkraftmaschinendaten werden bei der Herstellung in der Fabrik für jede Brennkraftmaschine individuell ermittelt.

Aufgabe der Erfindung ist es, eine Steuervorrichtung und ein Verfahren zur Steuerung einer Brennkraftmaschine anzugeben, bei der die Modellierung des Verhaltens der Brennkraftmaschine schneller an Änderungen des Betriebszustands anpassbar ist.

Diese Aufgabe wird mit den Merkmalen der unabhängigen Ansprüche gelöst.

Vorteilhafte Ausgestaltungen des Erfindungsgegenstandes sind in den zugehörigen Unteransprüchen dargelegt.

Somit wird der Regelgegenstand, insbesondere Verbrennungsmotor, von einer lernfähigen Steuerlogik modelliert und dieses Modell wird benutzt, um den Regelgegenstand, insbesondere Verbrennungsmotor, durch eine Optimalwertsteuerung auf einen bestimmten Optimalwert (Sollwert), insbesondere eine optimale Kraftstoffeinspritzmenge, gestellt, wobei in diesem Zusammenhang festgestellt wird, ob der Regelgegenstand, insbesondere Verbrennungsmotor, sich in einem stabilen, d.h. stationären Zustand, insbesondere Betriebszustand, befindet. Wenn er in einem stabilen Zustand ist, wird die Information über die Regelgröße (insbesondere die Kraftstoffeinspritzmenge) des Regelgegenstandes, insbesondere des Verbrennungsmotors, rückgekoppelt. Auf der Basis dieser Rückkopplungsinformation wird dann die Abweichung des Modells vom Istzustand des Regelgegenstandes, insbesondere Verbrennungsmotors, geschätzt und zur Korrektur dieser Abweichung werden geschätzte Lerndaten erzeugt, die von der lernfähigen Modellsteuerlogik gelernt werden und zur Optimierung der Regelgröße, insbesondere der Kraftstoffeinspritzmenge, in Abhängigkeit von der herrschenden Betriebsbedingungen führt.

Die Erfindung gestattet die Bereitstellung einer optimalen Kraftstoffeinspritzmenge auf der Grundlage eines Modells der Brennkraftmaschine und unter Verwendung eines Luftmengenmodells sowie eines Kraftstoffmengenmodells, die in Verbindung mit einer Rückkopplungsregelungsinformation betreffend den Sauerstoffgehalt des Abgases der Brennkraftmaschine korrigierbar sind.

Die Erfindung wird nachstehend anhand von Ausführungsbeispielen und zugehörigen Zeichnung näher erläutert. In diesen zeigen:

Fig. 1         eine schematische Darstellung eines Regelsystemes für das Luft-/Kraftstoff-Verhältnis (Lambda) für einen Verbrennungsmotor 1 mit einem Steuergerät 10 (Lambda-Regelung),

Fig. 2         ein schematisches Blockdiagramm des Steuergerätes 10 nach Fig. 1,

Fig. 3         ein schematisches Blockdiagramm des modellbasierten Reglers 20 in Fig. 2,

Fig. 4      ein schematisches Blockdiagramm des Kraftstoffmengen-Vorwärtsmodells 22 in Fig. 3,

Fig. 5      ein schematisches Blockdiagramm des Luftmengen-Vorwärtsmodells 21 in Fig. 4,

Fig. 6      ein Ausführungsbeispiel für ein hierarchisches, unscharfes neutrales Netz (Fuzzy Logik) zur Ermittlung eines Gemisch-Füllungsgrades des Motors, das die Motordrehzahl und den Drosselklappenwinkel als Eingangsgrößen verwendet,

Fig. 7      ein Ablaufdiagramm, das die Daten- und Signalverarbeitung des Lernreglers 60 und des Rückkopplungsreglers 70 (Fig. 2) verdeutlicht,

Fig. 8      ein Ausführungsbeispiel eines Verfahrens zur Erzeugung von geschätzten Lerndaten,

Fig. 9      ein weiteres Ausführungsbeispiel eines Verfahrens zur Erzeugung von geschätzten Lerndaten,

Fig. 10a und 10b      ein weiteres Ausführungsbeispiel eines Verfahrens zur Erzeugung von geschätzte Lerndaten verwendende Daten, und

Fig. 11a und 11b      ein weiteres Ausführungsbeispiel eines Verfahrens zur Erzeugung von geschätzte Lerndaten verwendende Daten.

Nachfolgend wird anhand der Steuerung des Luft-/Kraftstoff-Verhältnisses (Lambda-Regelung) für einen Motor unter Verwendung eines lernfähigen Kraftstoffmengen-Vorwärtsmodells und eines lernfähigen Luftmengen-Vorwärtsmodells zur Optimierung der Bereitstellung des Luft-/Kraftstoff-Gemisches für einen Verbrennungsmotor Ausführungsformen des erfindungsgemäßen, geschätzte Lerndaten verwendenden Lernverfahrens sowie eine hierzu gehörige Steuereinrichtung in einer Optimalwertsteuerung (Vorwärtsregelung bzw. Regelung mit Störgrößenaufschaltung) mit lernfähiger Steuerlogik erläutert.

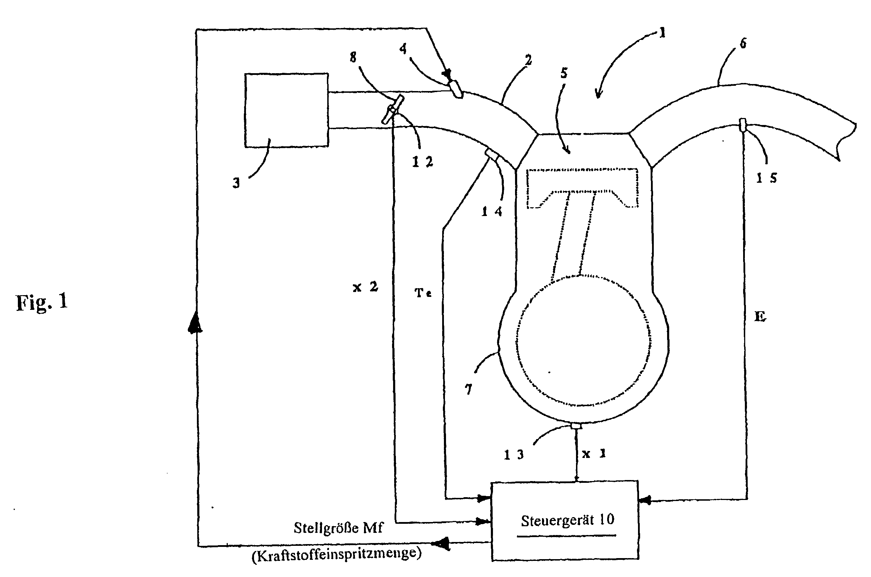

Die Figuren 1 bis 8 zeigen ein erstes Ausführungsbeispiel der erfindungsgemäßen, geschätzte Lerndaten verwendenden Lernmethode in einer Optimalwertsteuerung mit lernfähiger Steuerlogik (nachstehend einfach Lernmethode genannt), das auf die Lambdaregelung für einen Motor angewandt ist.

Figur 1 ist eine schematische Darstellung, die die Beziehung zwischen dem Motor 1 und dem Steuergerät 10 veranschaulicht, das die erfindungsgemäße Lernmethode zur Lambdaregelung anwendet.

Der Motor 1 ist ein Viertakter, bei dem der Brennraum im Zylinder 5 über den am Ansaugrohr 2 montierten Luftfilter 3 und das Einspritzventil 4 mit einem Kraftstoff/Luft-Gemisch versorgt wird, und nach der Verbrennung werden die Abgase über den Auspuffkrümmer 6 an die Atmosphäre abgegeben, wobei in dieser Zeichnung Bauteile wie Einlaß- und Auslaßventile ausgelassen wurden.

In Figur 1 wird das Kurbelgehäuse durch die Ziffer 7 angezeigt, die Drosselklappe durch die Ziffer 8. Das Steuergerät 10 regelt den Wert des Luft-Kraftstoff-Verhältnisses im Abgas, indem es die Kraftstoffeinspritzmenge des Einspritzventils 4 verstellt.

Wie in Figur 1 gezeigt, ist das Steuergerät 10 so konfiguriert, daß es folgendes als Eingabe verwendet:

Die von einem am Kurbelgehäuse 7 montierten Kurbelwinkelgeber 13 erhaltene Information $x_1$ über den Kurbelwinkel, die von einem an der Drosselklappe 8 montierten Drosselklappenschalter 12 erhaltene Information $x_2$ über den Drosselklappenwinkel, und die von einem am Ansaugrohr 2 montierten Ansaugrohrwandtemperaturfühler 14 erhaltene Information Te über die Ansaugrohrwandtemperatur.

Anhand dieser Eingabeinformation ermittelt es die Stellgröße Mf (d.h. die Kraftstoffeinspritzmenge) des am Ansaugrohr 2 montierten Einspritzventils 4 als Ausgabe.

Gleichzeitig verwendet es bei Bedarf das von der im Auspuffkrümmer 6 montierten Lambdasonde 15 ($O_2$-Sensor) erhaltene Signal E als Eingabe, um anhand dieser Information die Ausgabe des lernenden internen Modells zu korrigieren und das interne Modell zu lernen, so daß die Regelung ständig optimal sein kann.

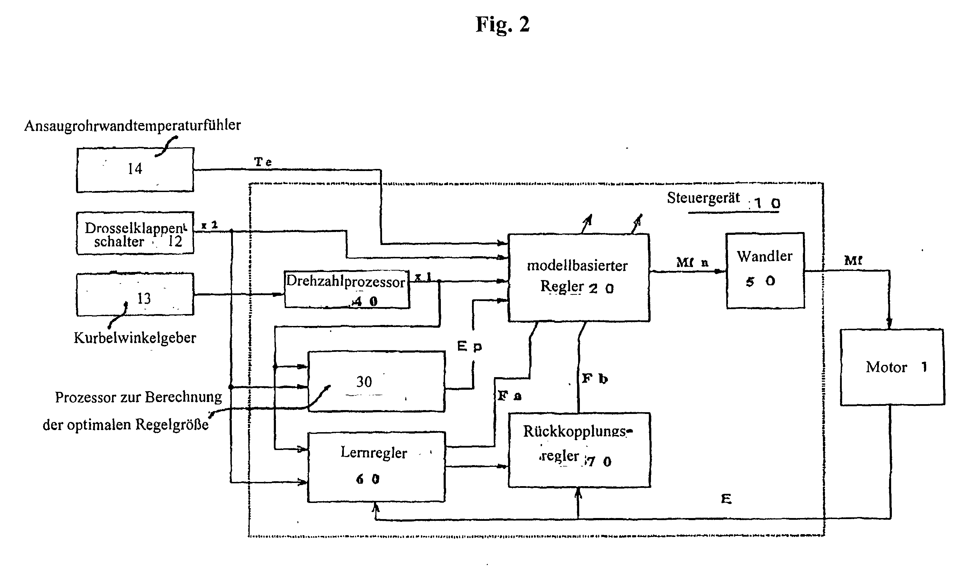

Figur 2 ist ein schematisches Blockdiagramm, das die Konfiguration des Steuergeräts 10 zeigt.

Das Steuergerät 10 umfaßt einen modellbasierten Regler 20, der mit Hilfe der Steuerlogik der Optimalwertsteuerung (feedforward control) die der optimalen Regelgröße Ep entsprechende Kraftstoffeinspritzmenge bestimmt, einen Prozessor 30 zur Berechnung dieser optimalen Regelgröße Ep, einen Drehzahlprozessor 40, einen Wandler 50, einen Lernregler 60, der die Abweichung des obigen modellbasierten Reglers 20 schätzt und durch Schätzung erhaltene Lerndaten gewinnt, und einen Rückkopplungsregler 70, der parallel zu der vom modellbasierten Regler 20 durchgeführten Optimalwertsteuerung eine Rückkopplungsregelung auf der Basis der Ausgabe der Lambdasonde 15 durchführt und durch Messung erhaltene Lerndaten gewinnt. Das Steuergerät funktioniert also in einem normalen Regelmodus, der die Optimalwertsteuerung durchführt, in einem Lernmodus, der das oben erwähnte Lernen

mit geschätzten Lerndaten durchführt, oder in einem Rückkopplungskorrekturmodus, der die obige Rückkopplungsregelung während der Optimalwertsteuerung durchführt.

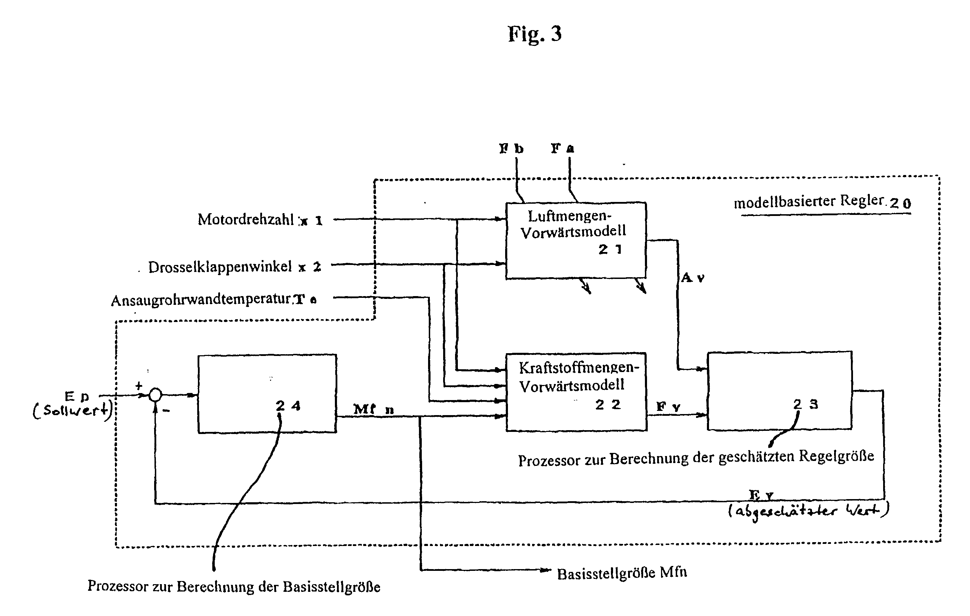

Im folgenden wird die Konfiguration des modellbasierten Reglers 20 anhand der Figuren 3 bis 5 beschrieben.

Figur 3 ist ein schematisches Blockdiagramm, das die Konfiguration des modellbasierten Reglers 20 veranschaulicht. Der modellbasierte Regler 20 umfaßt ein Luftmengen-Vorwärtsmodell 21, das durch Modellieren des Verhaltens der Luft im Ansaugrohr 2 erhalten wird, ein Kraftstoffmengen-Vorwärtsmodell 22, das durch Modellieren des Verhaltens des vom Einspritzventil 4 eingespritzten Kraftstoffs erhalten wird, und einen Prozessor 23 zur Berechnung der geschätzten Regelgröße, der ausgehend von der von den Modellen 21 und 22 ausgegebenen geschätzten Luftmenge Av und der geschätzten Kraftstoffmenge Fv die geschätzte Regelgröße Ev (geschätztes Kraftstoff/Luft-Verhältnis) berechnet.

Ferner umfaßt der modellbasierte Regler 20 eine Rückkopplungsschleife, die die vom Prozessor 23 ausgegebene geschätzte Regelgröße Ev zum Prozessor 24 zur Berechnung der Basisstellgröße rückführt. Dieser Prozessor 24 verwendet als Eingabe die vom Prozessor 23 ausgegebene geschätzte Regelgröße Ev und die vom Prozessor 30 (Sollwertgeber) ausgegebene optimale Regelgröße Ep, um für das Einspritzventil 4 im Motor 1 eine Basisstellgröße Mfn (Basiskraftstoffeinspritzmenge) zu berechnen. Diese Basisstellgröße Mfn wird vom modellbasierten Regler 20 ausgegeben und dient zugleich dem Kraftstoffmengen-Vorwärtsmodell 22 als Eingabe, da das Kraftstoffmengen-Vorwärtsmodell 22 die geschätzte Kraftstoffmenge Fv von dieser Basisstellgröße Mfn ausgehend ermittelt.

Wie erwähnt, umfaßt der modellbasierte Regler 20 also ein Luftmengen-Vorwärtsmodell 21, ein Kraftstoffmengen-Vorwärtsmodell 22 und, durch den Prozessor 23 zur Berechnung der geschätzten Regelgröße (des geschätzten Kraftstoff/Luft-Verhältnisses), ein Vorwärtsmodell des Motors 1.

Zudem verwendet er eine Rückkopplungsschleife, die das Kraftstoffmengen-Vorwärtsmodell 22, den Prozessor 23 zur Berechnung der geschätzten Regelgröße und den Prozessor 24 zur Berechnung der Basisstellgröße einschließt, um die vom

Vorwärtsmodell des Motors 1 ausgegebene geschätzte Regelgröße Ev rückzuführen und ein Umkehrmodell des Motors 1 zu bilden, das die Basisstellgröße Mfn ausgibt.

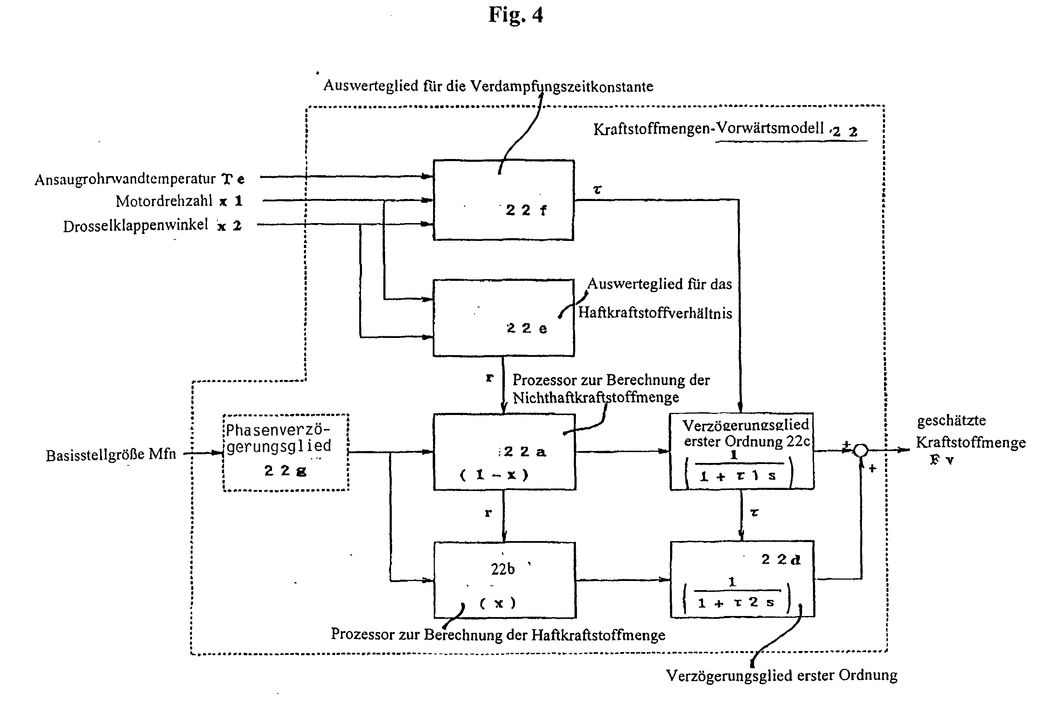

Figur 4 ist ein schematisches Blockdiagramm, das die Konfiguration des Kraftstoffmengen-Vorwärtsmodells 22 veranschaulicht.

Das Kraftstoffmengen-Vorwärtsmodell 22 wird durch Modellieren des Verhaltens des vom Einspritzventil 4 eingespritzten Kraftstoffs erhalten.

Dieses Kraftstoffmengen-Vorwärtsmodell 22 umfaßt einen Prozessor 22a zur Berechnung der Nichthaftkraftstoffmenge, einen Prozessor 22b zur Berechnung der Haftkraftstoffmenge, die Verzögerungsglieder erster Ordnung 22c, 22d, ein Auswerteglied 22e für das Haftkraftstoffverhältnis und ein Auswerteglied 22f für die Verdunstungszeitkonstante. Es verwendet die vom Prozessor 24 eingegebene Basisstellgröße Mfn (Basiskraftstoffeinspritzmenge) zur Schätzung der Kraftstoffmenge, die tatsächlich in den Zylinder 8 gelangt.

Das Auswerteglied 22e für das Haftkraftstoffverhältnis umfaßt ein unscharfes neuronales Netz (fuzzy neural network), ein neuronales Netz oder CMAC, das die Beziehung der Motordrehzahl x1 und des Drosselklappenwinkels x2 zum Haftkraftstoffverhältnis rv vorab gelernt hat und das Haftkraftstoffverhältnis rv modelliert. Es verwendet die Motordrehzahl x1 und den Drosselklappenwinkel x2 als Eingabe, um anhand dieser Information das Verhältnis rv des an der Wand des Ansaugrohrs 2 haftenden Kraftstoffs (Haftkraftstoffs) zum vom Einspritzventil 4 direkt eingespritzten Kraftstoff (Nichthaftkraftstoff) zu schätzen (nachstehend Haftkraftstoffverhältnis rv genannt).

Dieses Auswerteglied 22e für das Haftkraftstoffverhältnis kann, was in der Figur nicht gezeigt wird, so konfiguriert sein, daß es bei Bedarf, wenn der Motor in einem Übergangszustand ist, Lerndaten auf der Basis des Vergleichsergebnisses der gemessenen Regelgröße mit der optimalen Regelgröße Ep als Eingabe verwendet, um alterungsbedingte Abweichungen des Kraftstoffmengen-Vorwärtsmodells zu korrigieren und zu lernen.

Das obige Auswerteglied 22f für die Verdunstungszeitkonstante umfaßt ein unscharfes neuronales Netz, ein neuronales Netz oder CMAC, das die Beziehung der Motordrehzahl x1, des Drosselklappenwinkels x2 und der Ansaugrohrwandtemperatur (oder Kühlwassertemperatur) Te zur Verdunstungszeitkonstante τ vorab gelernt hat. Es verwendet die Motordrehzahl x1, den Drosselklappenwinkel x2 und die Ansaugrohrwandtemperatur Te als Eingabe, um anhand dieser Information die Zeitkonstante τ der Verdunstung des an der Wand haftenden Kraftstoffs (nachstehend Verdunstungszeitkonstante τ genannt) zu schätzen.

Auch dieses Auswerteglied 22f für die Verdunstungszeitkonstante kann, was in der Figur nicht gezeigt wird, so konfiguriert sein, daß es bei Bedarf, wenn der Motor in einem Übergangszustand ist, Lerndaten auf der Basis des Vergleichsergebnisses der gemessenen Regelgröße mit der optimalen Regelgröße Ep als Eingabe verwendet, um alterungsbedingte Abweichungen des Kraftstoffmengen-Vorwärtsmodells zu korrigieren und zu lernen.

Das obige Auswerteglied 22e für das Haftkraftstoffverhältnis und das Auswerteglied 22f für die Verdunstungszeitkonstante wurden im vom Anmelder am 14.10.1996 angemeldeten japanischen Patent H8-271188 auf detaillierte Weise offenbart.

Der Prozessor zur Berechnung der Nichthaftkraftstoffmenge 22a berechnet auf der Basis des vom Auswerteglied 22e für das Haftkraftstoffverhältnis erhaltenen Haftkraftstoffverhältnisses rv die Kraftstoffmenge, die bei der vom Prozessor 24 eingegebenen Basisstellgröße Mfn (Basiskraftstoffeinspritzmenge) vom Einspritzventil 4 aus direkt in den Brennraum des Zylinders 5 gelangt.

Der Prozessor 22b zur Berechnung der Haftkraftstoffmenge berechnet auf der Basis des vom Auswerteglied 22e für das Haftkraftstoffverhältnis erhaltenen Haftkraftstoffverhältnisses rv die Kraftstoffmenge, die bei der vom Prozessor 24 eingegebenen Basisstellgröße Mfn (Basiskraftstoffeinspritzmenge) in den Zylinder 5 gelangt, nachdem sie einmal an der Wand gehaftet hat.

Die vom Prozessor 22a zur Berechnung der Nichthaftkraftstoffmenge und vom Prozessor 22b zur Berechnung der Haftkraftstoffmenge berechneten Kraftstoffmengen werden dann jeweils in den Verzögerungsgliedern erster Ordnung 22c und 22d auf der Basis der vom Auswerteglied 22f für die Verdunstungszeitkonstante ermittelten Verdunstungszeitkonstanten $\tau1$, $\tau2$ in einem Verzögerungssystem erster Ordnung genähert und dann addiert, um vom Kraftstoffmengen-Vorwärtsmodell 22 als geschätzte Kraftstoffmenge Fv ausgegeben zu werden.

Beim Modellieren des Verhaltens des Kraftstoffs, der vom Einspritzventil 4 im Motor 1 eingespritzt wird, ist eine Totzeit zu berücksichtigen, die vom eingespritzten Kraftstoff benötigt wird, um vom Einspritzventil 4 aus in den Zylinder 5 zu gelangen, weshalb, wie in Figur 4 durch eine unterbrochene Linie dargestellt, normalerweise ein Phasenverzögerungsglied 22g notwendig wäre, das die Phase um die Totzeit verzögert.

In diesem Ausführungsbeispiel läßt sich die Notwendigkeit eines solchen Phasenverzögerungsglieds 22g für die Totzeit beseitigen, indem man im Kraftstoffmengen-Vorwärtsmodell 22 eine Phasenverzögerung um die Totzeit vorsieht. Dadurch wird das Kraftstoffmengen-Vorwärtsmodell 22 zu einem einfachen Verzögerungssystem erster Ordnung, was bei der Durchführung der Rückkopplungsregelung mit der Ausgabe des Kraftstoffmengen-Vorwärtsmodells 22 einen großen Rückkopplungsgewinn und den Erhalt eines präzisen inversen Modells bzw. Umkehrmodells des Motors 1 erlaubt, das auch bei Übergangszuständen korrekte Basisstellgrößen liefert.

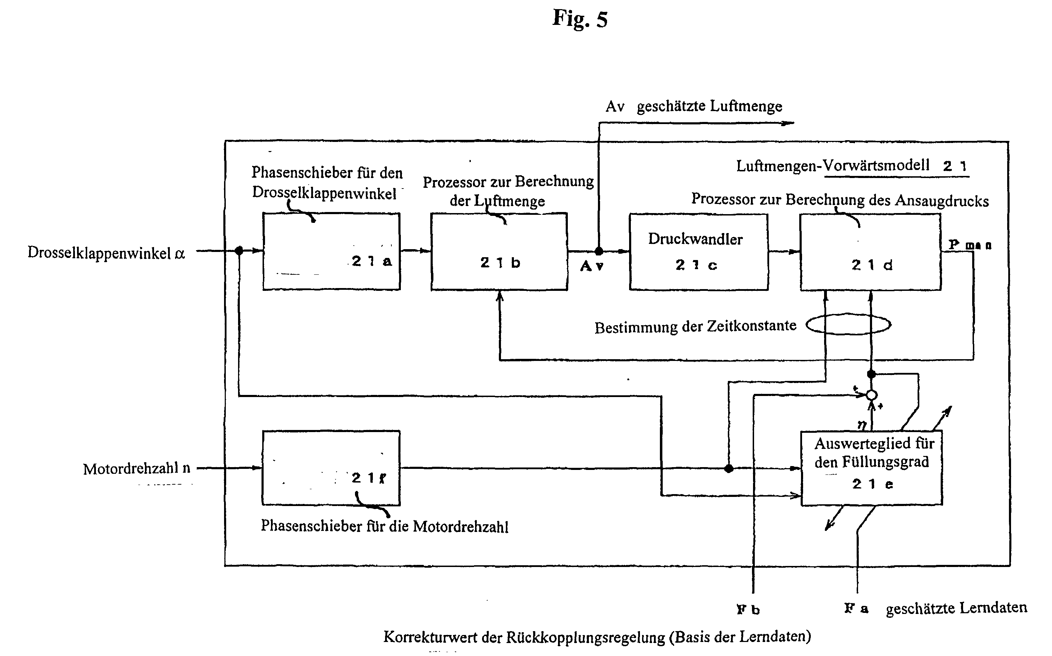

Figur 5 ist ein schematisches Blockdiagramm, das die Konfiguration des Luftmengen-Vorwärtsmodells 21 veranschaulicht.

Das Luftmengen-Vorwärtsmodell 21 umfaßt einen Phasenschieber 21a für den Drosselklappenwinkel, einen Prozessor 21b zur Berechnung der Luftmenge, einen Druckwandler 21c, einen Prozessor 21d zur Berechnung des Ansaugdrucks, ein Auswerteglied 21e für den Füllungsgrad und einen Phasenschieber 21f für die Motordrehzahl.

In den Phasenschiebern 21a für den Drosselklappenwinkel und 21f für die Motordrehzahl werden die Phasen des als Eingabe verwendeten Drosselklappenwinkels x2 und der Motordrehzahl x1 um jene Totzeit (d.h., die Zeit, die der eingespritzte Kraftstoff benötigt, um vom Einspritzventil 4 in den Zylinder 5 zu gelangen) vorgeschoben, die im Kraftstoffmengen-Vorwärtsmodell 22 eliminiert wurde. D.h., jeder der Phasenschieber 21a und 21f umfaßt jeweils ein neuronales Netz, das die zeitbezogenen Änderungsmuster der Motordrehzahl oder des Drosselklappenwinkels vorab gelernt hat.

Mit Hilfe dieses neuronalen Netzes wird die Phasenverschiebung durchgeführt, indem ausgehend von der Motordrehzahl oder vom Drosselklappenwinkel zu verschiedenen Zeiten in der Vergangenheit ein künftiger Wert der Motordrehzahl oder des Drosselklappenwinkels ermittelt wird.

Wie oben erwähnt, werden die Phasen des Drosselklappenwinkels und der Motordrehzahl im Luftmengen-Vorwärtsmodell 21 um die Totzeit vorgeschoben, was bedeutet, daß die Phasen des Kraftstoffmengen-Vorwärtsmodells 22 und des Luftmengen-Vorwärtsmodells 21 beide um die Totzeit verschoben werden, wodurch die Phasenabweichung zwischen der geschätzten Kraftstoffmenge Fv und der geschätzten Luftmenge Av aufgehoben wird, die durch die Eliminierung der Totzeit im Kraftstoffmengen-Vorwärtsmodell 22 entstanden ist. Dies erlaubt dem Prozessor 23 die Ermittlung einer korrekten geschätzten Regelgröße.

Zudem kann beispielsweise beim Modellieren des Verhaltens des eingespritzten Kraftstoffs in einem Motor mit Direkteinspritzung, der keine Totzeit hat, oder wenn die Totzeit so gering ist, daß sie vernachlässigt werden kann, auf die Verwendung der Verzögerungsglieder für die Totzeit von vornherein verzichtet werden, wodurch auch die Notwendigkeit der Phasenschieber 21a und 21f im Luftmengen-Vorwärtsmodell 21 entfällt. Als Methode zur Phasenverschiebung kommt nicht nur ein neuronales Netz in Frage, sondern z.B. auch die Methode der kleinsten Quadrate.

Die Luftmenge Av und der Ansaugdruck Pman werden von den Prozessoren 21b, 21d mit Hilfe der strömungsmechanischen Gleichungen (1) und (2) modelliert.

$$\text{Luftmenge Av } (\alpha, \text{Pman})$$

$$= (Ct(\Pi/4)D^2(\text{Pamb}\sqrt{k})/(\sqrt{(\text{PTamb})}))\beta_1(\alpha)\beta_2(\text{Pman})+\text{Mao} \tag{1}$$

$$\text{Ansaugdruck}$$

$$= Pman = (-1/\tau)(Pman(RTman/V))Av(\alpha, Pman) \tag{2}$$

Hier ist Ct der Durchflußkoeffizient an der Drosselklappe, D der Durchmesser der Drosselklappe, Pamb der Umgebungsluftdruck, k die spezifische Wärmekapazität der Luft, Tamb die Umgebungslufttemperatur, R eine Gaskonstante, Mao ein Korrekturfaktor, Tman die Ansaugrohrtemperatur, V das Ansaugrohrvolumen, $\beta_1$ ein drosselklappenwinkelabhängiger Koeffizient und $\beta_2$ ein ansaugrohrdruckabhängiger Koeffizient.

Da der Füllungsgrad η nicht mit einer Gleichung modelliert werden kann, führt das Auswerteglied 21e für den Füllungsgrad die Modellierung mit Hilfe eines unscharfen neuronalen Netzes - Fuzzy Logik - (oder eines neuronalen Netzes oder CMACs) durch, das die Beziehung der Motordrehzahl x1 und des Drosselklappenwinkels x2 zum Füllungsgrad η vorab gelernt hat.

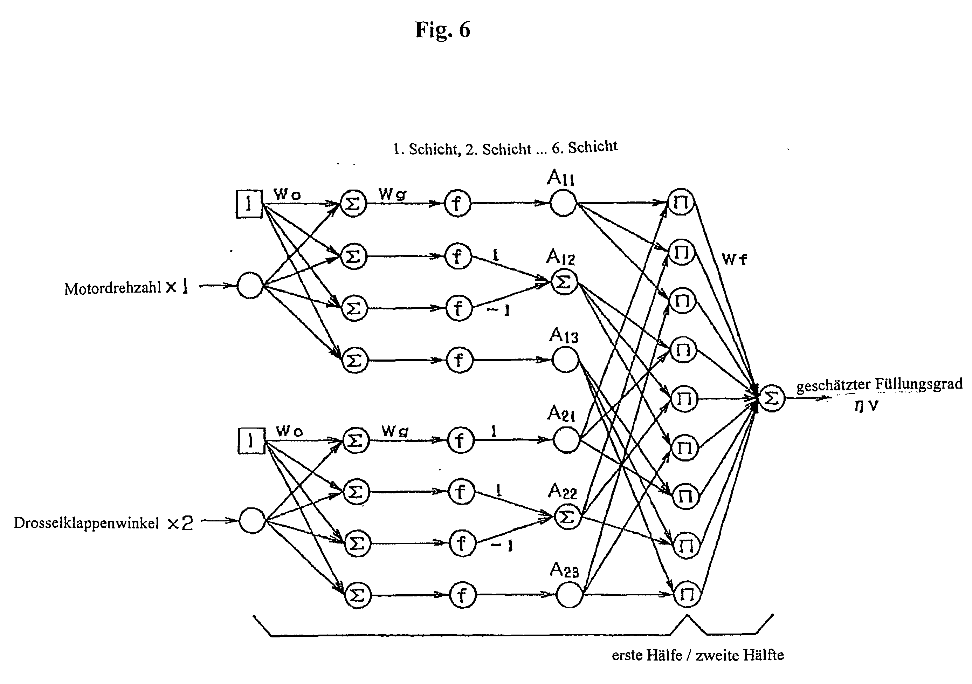

Figur 6 zeigt ein Beispiel für ein unscharfes neuronales Netz zur Ermittlung des Füllungsgrads η, das als Eingabe die Motordrehzahl und den Drosselklappenwinkel verwendet.

Dieses unscharfe neuronale Netz ist ein aus sechs Schichten bestehendes hierarchisches Netz, dessen erste Hälfte aus der ersten bis vierten Schicht, und dessen zweite Hälfte aus der fünften und sechsten Schicht besteht.

In diesem Beispiel haben die Motordrehzahl x1 und der Drosselklappenwinkel x2 in der ersten Hälfte jeweils drei Zustände (membership functions) A11, A12, A13, A21, A22, A23, und der Eingabebereich in der zweiten Hälfte (d.h., die fünfte Schicht) ist in 3 x 3 = 9 Segmente (Bereiche) unterteilt.

In Figur 6 sind wc, wg, wf, 1 und -1 Kopplungskoeffizienten zwischen den in den runden Symbolen gezeigten Einheiten, und die in den viereckigen Symbolen der ersten Schicht gezeigte Einheit ist eine Bias-Einheit, die stets den konstanten Wert 1 ausgibt.

Jede Einheit in der dritten Schicht hat eine durch die nachstehende Gleichung definierte sigmoide Funktion, und diese sigmoiden Funktionen ergeben die Zustände der ersten Hälfte.

$$f(x) = \frac{1}{1 + \exp(-x)}$$

Dieser Netzkonfiguration zufolge wird zur Motordrehzahl x1 und zum Drosselklappenwinkel x2, die in der ersten Schicht eingegeben wurden, in der zweiten Schicht der Kopplungskoeffizient wc als Bias addiert, dann wird der mit dem Kopplungskoeffizienten wg versehene Wert in die entsprechende Einheit der dritten Schicht eingegeben. Daher läßt sich die Ausgabe jeder Einheit in der dritten Schicht durch folgende Gleichung ausdrücken:

$$f(x) = \frac{1}{1 + \exp(-wg(xi + wc))}$$

D.h., die Kopplungskoeffizienten wc, wg sind Parameter, die jeweils den Zentralwert und die Neigung der sigmoiden Funktion festlegen, und diese Kopplungskoeffizienten wc, wg werden in jeder sigmoiden Funktion durch Lernen auf den korrekten Wert gesetzt.

Dadurch werden als Ausgabe in der vierten Schicht der ersten Hälfte die Zustände A11, A12, A13, A21, A22, A23 erhalten, die einen bestimmten Motordrehzahl- und Drosselklappenwinkelbereich abdecken.

Hier bedeutet der Zustand A11 "niedrige Drehzahl", A12 "mittlere Drehzahl", A13 "hohe Drehzahl", A21 "kleiner Drosselklappenwinkel", A22 "mittlerer Drosselklappenwinkel" und A23 "großer Drosselklappenwinkel".

In diesem Beispiel ist die zweite Hälfte, wie oben erwähnt, in 3 x 3 = 9 Fuzzy-Regeln unterteilt, und in der fünften Schicht wird anhand des Grads jedes Zustands in der ersten Hälfte die Konformität der ersten Hälfte mit jeder Fuzzy-Regel berechnet.

Für jede Zustandskombination der Motordrehzahl und des Drosselklappenwinkels in der ersten Hälfte besagt die Fuzzy-Regel [ if Motordrehzahl x1 = Zustand A1n (n=1-3) and Drosselklappenwinkel x2 Zustand A2n (n=1-3) then Füllungsgrad = wf]. D.h., der Kopplungskoeffizient wf ist ein Parameter, der der Ausgabe der Fuzzy-Regel entspricht, und dieser Kopplungskoeffizient wf wird in jeder Fuzzy-Regel durch Lernen auf den korrekten Wert gesetzt, zum Beispiel durch [ if Motordrehzahl x1 = im hohen Drehzahlbereich and Drosselklappenwinkel x2 = mittel then Füllungsgrad wf = 50%] oder [ if Motordrehzahl x1 = im niedrigen Drehzahlbereich and Drosselklappenwinkel x2 = klein then Füllungsgrad wf = 70%].

In der sechsten Schicht wird das gewichtete Mittel des Kopplungskoeffizienten wf gebildet, der die Ausgabe der Fuzzy-Regel ist und der Konformität der ersten Hälfte mit jeder Fuzzy-Regel entspricht, und dieser von der Fuzzy-Logik ermittelte Schätzwert ist der geschätzte Füllungsgrad ηv.

Das oben beschriebene Auswerteglied 21e für den Füllungsgrad ist so konfiguriert, daß es vom Lernregler 60 oder vom Rückkopplungsregler 70 lernen kann, um Abweichungen des Modells vom realen Regelgegenstand zu korrigieren.

D.h., im Rückkopplungsregler 70 werden durch Messung erhaltene Lerndaten gewonnen, während im Lernregler 60 durch Schätzung erhaltene Lerndaten gewonnen werden, und von einem dieser Regler lernt das Auswerteglied 21e für den Füllungsgrad jeweils in seiner ersten Hälfte die Kopplungskoeffizienten wc, wg, oder in seiner zweiten Hälfte den Kopplungskoeffizienten wf.

Wie in den Figuren 3 bis 5 gezeigt, gibt der Lernregler 60 die angenommenen Lerndaten direkt aus, der Rückkopplungsregler 70 aber gibt für den vom Auswerteglied 21e für den Füllungsgrad erhaltenen geschätzten Füllungsgrad ηv einen Korrekturwert aus, und dieser korrigierte geschätzte Füllungsgrad ηv' wird dann als Lerndatum verwendet.

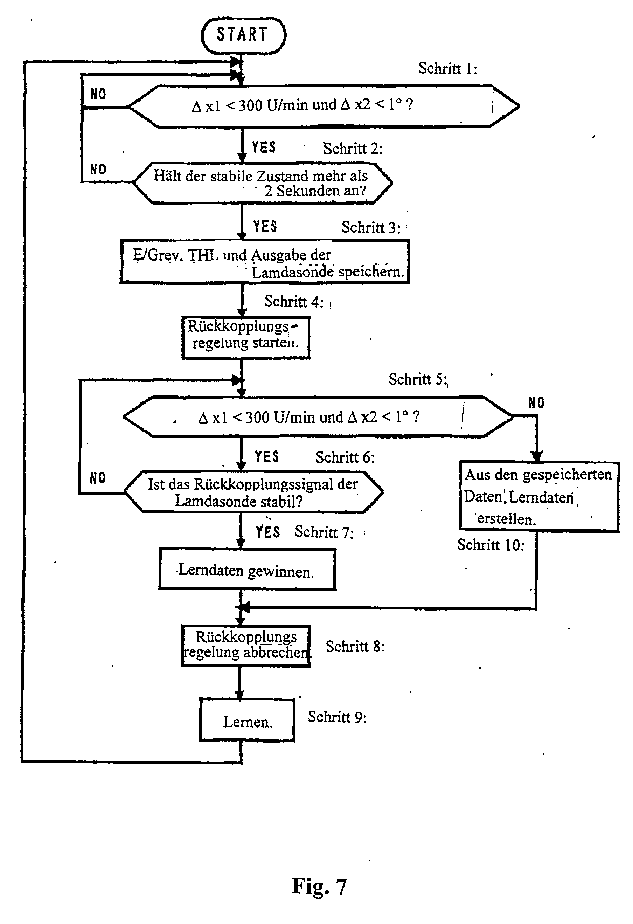

Im folgenden wird die Verarbeitung des Lernreglers 60 und des Rückkopplungsreglers 70 anhand des Flußdiagramms in Figur 7 detailliert beschrieben.

Der Lernregler 60 verwendet die Motordrehzahl x1 und den Drosselklappenwinkel x2 als Eingabe und überwacht anhand der Änderungsraten $\Delta$x1 und $\Delta$x2, ob der Betriebszustand des Motors in einem stationären Zustand ist. D.h., wenn im Ausführungsbeispiel die Änderungsrate der Motordrehzahl $\Delta$x1 kleiner als 300 U/min. und die des Drosselklappenwinkels $\Delta$x1 kleiner als 1° ist, gilt der Betriebszustand des Motors als stationär, und die Verarbeitung geht in Schritt 2 weiter.

In Schritt 2 wird überwacht, ob der obige stationäre Zustand des Betriebszustands tatsächlich vom Kraftstoff/ Luft-Verhältnis reflektiert wird, das die verwendete Regelgröße ist, und ob diese Regelgröße in einem stationären Zustand ist. D.h., wenn dieser stationäre Betriebszustand eine bestimmte Zeit lang (2 Sekunden im Ausführungsbeispiel in Figur 7) anhält, gilt auch der Zustand der Regelgröße als stationär.

Wenn diese Schritte 1 und 2 ergeben, daß sowohl der Betriebszustand des Motors als auch die Regelgröße in einem stationären Zustand sind, geht die Verarbeitung in Schritt 3 weiter.

Wenn in den Schritten 1 und 2 ein stationärer Zustand des Regelgegenstands (des Motors 1) festgestellt wird, wird der aktuelle Wert der Motordrehzahl x1 und des Drosselklappenwinkels x2 zusammen mit dem Ausgabesignal E der Lamdasonde (fett/mager) als Rückkopplungsinformation gespeichert (Schritt 3), dann wird ein Signal "Rückkopplungsregelung starten" an den Rückkopplungsregler 70 ausgegeben (Schritt 4). Der Rückkopplungsregler 70 beginnt aufgrund des vom Lernregler 60 erhaltenen Signals "Rückkopplungsregelung starten" mit der Rückkopplungsregelung. D.h., wenn das von der Lambdasonde 15 erhaltene Signal E zum Beispiel "fett" ist, gibt er ein Korrektursignal Fb aus, das den geschätzten ηv um eine bestimmte Menge reduziert, und zwar so lange, bis das von der Lambdasonde 15 erhaltene Signal E umschlägt, und wenn das von der Lambdasonde 15 erhaltene Signal E "mager" geworden ist, gibt er ein Korrektursignal Fb aus, das den geschätzten Füllungsgrad ηv um eine bestimmte Menge erhöht. Diese Rückkopplungsregelung wird so lange fortgesetzt, bis das von der Lambdasonde 15 erhaltene Signal E periodisch umschlägt (d.h., bis der Wechsel zwischen "fett" und "mager" periodisch geworden ist). Wenn das von der Lambdasonde 15 erhaltene Signal E periodisch wird, konvergieren die Korrekturmengen der Rückkopplungsregelung, und wenn die Rückkopplungsregelung als stabil gilt (Schritt 6), wird der korrigierte geschätzte ηv' als Lerndatum gewonnen (Schritt 7), dann wird die Rückkopplungsregelung abgebrochen (Schritt 8), und das Auswerteglied 21e für den Füllungsgrad beginnt zu lernen (Schritt 9).

Auch nach dem Start der Rückkopplungsregelung setzt der Lernregler 60 die Überwachung des stationären Zustands des Regelgegenstands fort (Schritt 5), und wenn der Regelgegenstand während der Rückkopplungsregelung seinen stationären Zustand verläßt, werden auf der Basis der in Schritt 3 gespeicherten Rückkopplungsinformation die geschätzten Lerndaten Fa erzeugt (Schritt 10).

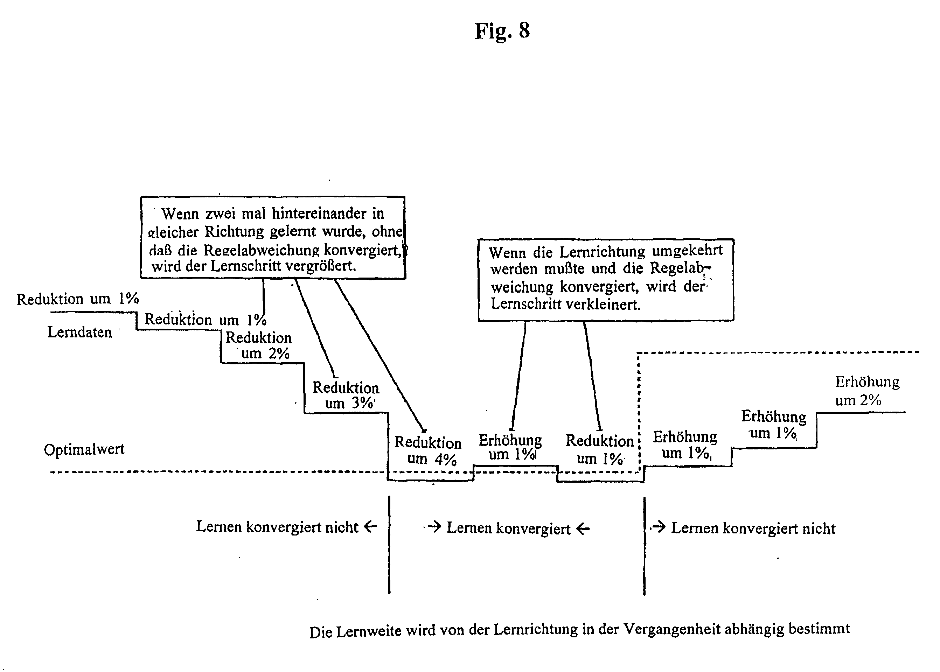

Figur 8 ist eine schematische Abbildung, die die Methode zur Erzeugung der obigen geschätzten Lerndaten für das erste Ausführungsbeispiel veranschaulicht.

Wie in Figur 8 gezeigt, speichert der Lernregler 60 die Lernrichtung in der Vergangenheit, und anhand dieser Lernrichtung und der in Schritt 3 gespeicherten Rückkopplungsinformation (die tatsächliche Ausgabe der Lambdasonde) erzeugt es geschätzte Lerndaten.

D.h., wenn nach dem Start der Rückkopplungsregelung (Schritt 4) der Steuergegenstand seinen stationären Zustand verläßt (Schritt 5), dann vergleicht der Lernregler 60 die dem in Schritt 3 gespeicherten Wert der Motordrehzahl und des Drosselklappenwinkels entsprechende vormalige Lernrichtung der Kopplungskoeffizienten in der zweiten Hälfte (oder ersten Hälfte) des unscharfen neuronalen Netzes mit der Rückkopplungsinformation (der in Schritt 3 gespeicherten Ausgabe der Lambdasonde), und wenn der gleiche Kopplungskoeffizient mehr als zweimal die gleiche Richtung (reduzieren oder erhöhen) hat, wird der Wert der geschätzten Lerndaten gegenüber den vormals geschätzten Lerndaten verdoppelt.

Wenn hier über die vormalige Lernrichtung keine Daten vorliegen und dieser Kopplungskoeffizient zum ersten mal gelernt wird, wird zur Erzeugung von geschätzten Lerndaten, falls die Rückkopplungsinformation (die Ausgabe der Lambdasonde) "fett" ist, der Kopplungskoeffizient um eine bestimmte Minimalmenge (1% in Figur 8) reduziert, und das Lernen des unscharfen neuronalen Netzes im Auswerteglied 21e für den Füllungsgrad beginnt (Schritt 9).

Wenn hier beim Lernen der Kopplungskoeffizient bereits um den Minimalwert (1%) reduziert wurde, wird zur Erzeugung von geschätzten Lerndaten der Kopplungskoeffizient erneut um eine bestimmte Minimalmenge (1% in Figur 8) reduziert, und das Lernen des unscharfen neuronalen Netzes im Auswerteglied 21e für den Füllungsgrad beginnt (Schritt 9).

Und wenn hier beim Lernen der Kopplungskoeffizient bereits zweimal hintereinander um den Minimalwert (1%) reduziert wurde und die bisher geschätzten Lerndaten nicht ausreichen, um eine Konvergenz der Abweichung zwischen Modell und Regelgegenstand zu bewirken, wird der Wert der geschätzten Lerndaten um die doppelte Minimalmenge (2%) reduziert.

Dieses Erzeugen von geschätzten Lerndaten (Schritt 10) und Lernen von geschätzten Lerndaten (Schritt 9) wird jedesmal bei der Verarbeitung von Schritt 10 durchgeführt, und wenn das Ausgabesignal der Lambdasonde gegenüber der vormaligen Lernrichtung umschlägt, werden die geschätzten Lerndaten auf den Minimalwert zurückgesetzt, und die Lernrichtung wird umgekehrt.

Durch dieses Erzeugen von geschätzten Lerndaten und Lernen von geschätzten Lerndaten läßt sich das Modell im Auswerteglied 21e für den Füllungsgrad auch ohne durch Messung erhaltene Lerndaten in eine Richtung korrigieren, die sich dem Optimalwert annähert, bis es schließlich mit dem Optimalwert konvergiert.

Die oben beschriebene Anwendung des Lernreglers 60 und des Rückkopplungsreglers 70 erlaubt es, Abweichungen des Modells im Auswerteglied 21e für den Füllungsgrad anhand der von der Rückkopplungsregelung durch Messung erhaltenen Lerndaten durch Lernen zu korrigieren, wenn der stationäre Zustand des Regelgegenstands anhält, bis die Korrekturmengen der Rückkopplungsregelung konvergieren. Selbst wenn der stationäre Zustand des Regelgegenstands nicht anhält, bis die Korrekturmengen der Rückkopplungsregelung konvergieren (was tatsächlich häufig der Fall ist), ist der Lernregler 60 in der Lage, Abweichungen des Modells im Auswerteglied 21e für den Füllungsgrad anhand der Rückkopplungsinformationen über den Regelgegenstand im stationären Zustand durch Lernen mit geschätzten Lerndaten zu schätzen und zu korrigieren. Dies ermöglicht auch dann eine ständige Korrektur des Modells durch Lernen, wenn der Regelgegenstand in Gebrauch ist, z.B. bei einem laufenden Motor während der Fahrt.

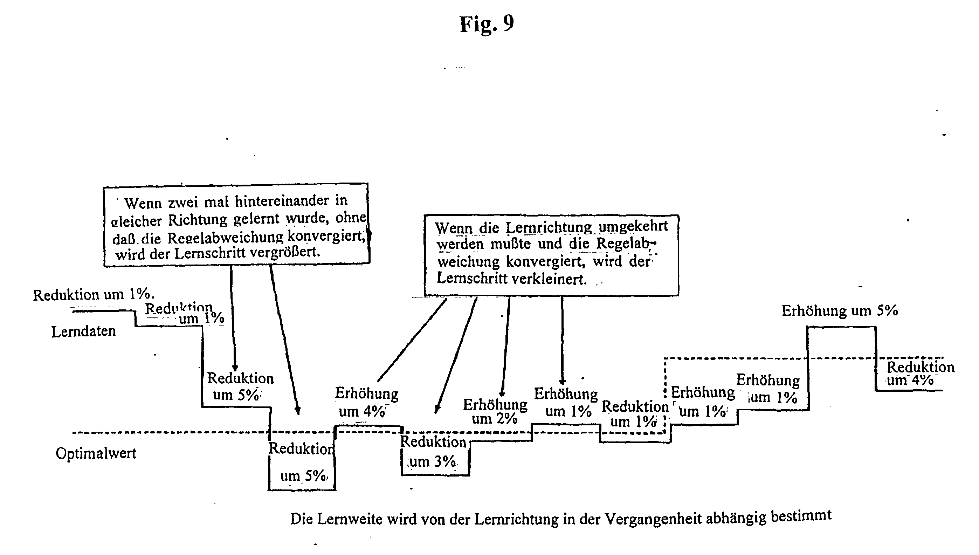

Die Figuren 9 bis 11 zeigen weitere Ausführungsbeispiele der Verarbeitung im Lernregler 60 zur Erzeugung von geschätzten Lerndaten (Schritt 10 in Figur 7).

Bei dem in Figur 9 gezeigten Beispiel ist der Minimalwert (z.B. 1%) und der Maximalwert (z.B. 5%) der geschätzten Lerndaten von vornherein festgelegt, und wenn das Lernen zweimal hintereinander in gleicher Richtung bei diesem Minimalwert durchgeführt wurde, werden die nächsten geschätzten Lerndaten auf den obigen Maximalwert gesetzt. Dieser Maximalwert kann so gewählt werden, daß er auf das Fahrverhalten keinen Einfluß ausübt (d.h. ein Maximalwert mit einem Schwankungsbereich, der für den Fahrer nicht spürbar ist).

Wenn die geschätzten Lerndaten auf den Maximalwert gesetzt wurden, wird dieser Maximalwert beibehalten, bis die Rückkopplungsinformation (die Ausgabe der Lambdasonde) umschlägt, dann wird der Wert der geschätzten Lerndaten nach und nach um ein bestimmtes Intervall verkleinert, bis er den Minimalwert erreicht.

Diese direkte Erhöhung der geschätzten Lerndaten vom Minimalwert auf den Maximalwert erlaubt es, die zur Korrektur der Abweichung des Modells vom Regelgegenstand benötigte Zeit im Vergleich zum Ausführungsbeispiel in Figur 8 zu verkürzen.

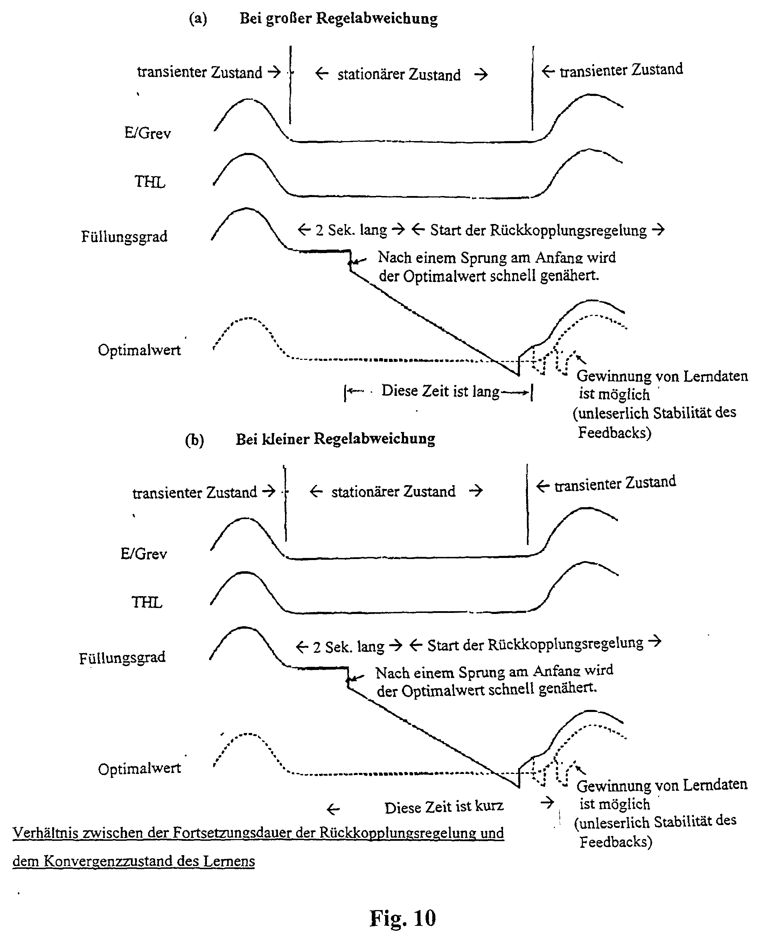

Figur 10 zeigt ein weiteres Beispiel zur Erzeugung von geschätzten Lerndaten.

Bei dem in Figur 10 gezeigten Beispiel verwendet der Lernregler 60 als Rückkopplungsinformation eine Rückkopplungsregelungsinformation über den Rückkopplungsregler 70, d.h. das Verhältnis zwischen der Fortsetzungsdauer der Rückkopplungsregelung und dem Konvergenzzustand des Lernens, um anhand dieser Rückkopplungsinformation geschätzte Lerndaten zu erzeugen.

D.h., wenn nach dem Start der Rückkopplungsregelung in Schritt 4 von Figur 7 in Schritt 5 festgestellt wird, daß der Regelgegenstand seinen stationären Zustand verlassen hat, bevor die Korrekturmengen der Rückkopplungsregelung konvergieren, wird die Fortsetzungsdauer der Rückkopplungsregelung als Rückkopplungsinformation verwendet, um die Abweichung des Modells vom Regelgegenstand zu schätzen.

Wie in Figur 10 (a) gezeigt, ist die vom Auswerteglied 21e für den Füllungsgrad ausgegebene Korrekturmenge groß, wenn die Zeit zwischen dem Start der Rückkopplungsregelung und dem Umschlagen des Ausgabesignals der Lambdasonde lang ist, weshalb die Abweichung des Modells vom Regelgegenstand groß ist. Demgegenüber ist, wie in Figur 10 (b) gezeigt, die vom Auswerteglied 21e für den Füllungsgrad ausgegebene Korrekturmenge klein, wenn die Zeit zwischen dem Start der Rückkopplungsregelung und dem Umschlagen des Ausgabesignals der Lambdasonde kurz ist, weshalb die Abweichung des Modells vom Regelgegenstand klein ist.

D.h., die Zeit vom Start der Rückkopplungsregelung bis zum Umschlagen des Ausgabesignals der Lambdasonde und die Größe der Abweichung des Modells vom Regelgegenstand stehen in einem proportionalen Verhältnis, und der Lernregler 60 erzeugt geschätzte Lerndaten auf der Basis dieses Verhältnisses.

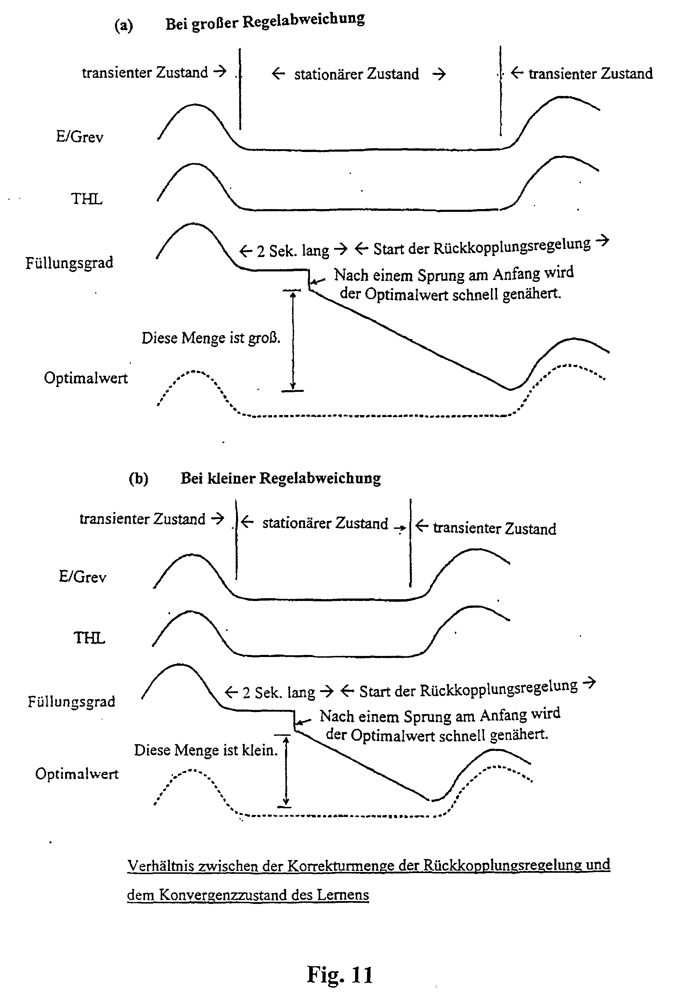

Figur 11 zeigt ein weiteres Beispiel zur Erzeugung von geschätzten Lerndaten.

Bei dem in Figur 11 gezeigten Beispiel verwendet der Lernregler 60 als Rückkopplungsinformation eine Rückkopplungsregelungsinformation über den Rückkopplungsregler 70, d.h. die Beziehung zwischen der Korrekturmenge der Rückkopplungsregelung und dem Konvergenzzustand des Lernens, um anhand dieser Rückkopplungsinformation geschätzte Lerndaten zu erzeugen.

D.h., wenn nach dem Start der Rückkopplungsregelung in Schritt 4 von Figur 7 in Schritt 5 festgestellt wird, daß der Regelgegenstand seinen stationären Zustand verlassen hat, bevor die Korrekturmengen der Rückkopplungsregelung konvergieren, wird die Summe der Korrekturmengen als Rückkopplungsinformation verwendet, um die Abweichung des Modells vom Regelgegenstand zu schätzen.

Wie in Figur 11 (a) gezeigt, ist die Abweichung des Modells vom Regelgegenstand um so größer, je größer die Summe der Korrekturmengen für den geschätzten Füllungsgrad in der Rückkopplungsregelung vom Start der Rückkopplungsregelung bis zu dem Zeitpunkt ist, an dem der Regelgegenstand seinen stationären Zustand verläßt. Demgegenüber ist, wie in Figur 11 (b) gezeigt, die Abweichung des Modells vom Regelgegenstand um so kleiner, je kleiner die Summe der Korrekturmengen für den geschätzten Füllungsgrad in der Rückkopplungsregelung vom Start der Rückkopplungsregelung bis zu dem Zeitpunkt ist, an dem der Regelgegenstand seinen stationären Zustand verläßt.

D.h., die Summe der Korrekturmengen für den geschätzten Füllungsgrad in der Rückkopplungsregelung vom Start der Rückkopplungsregelung bis zu dem Zeitpunkt, an dem der Regelgegenstand seinen stationären Zustand verläßt, und die Größe der Abweichung des Modells vom Regelgegenstand stehen in einem proportionalen Verhältnis, und der Lernregler 60 erzeugt geschätzte Lerndaten auf der Basis dieses Verhältnisses.

Bei dieser Methode zur Erzeugung von geschätzten Lerndaten wird, sobald das Ausgabesignal der Lambdasonde während der Rückkopplungsregelung umschlägt, die Summe der Korrekturmengen für den geschätzten Füllungsgrad in der Rückkopplungsregelung vom Start der Rückkopplungsregelung bis zu dem Zeitpunkt verwendet, an dem der Regelgegenstand seinen stationären Zustand verläßt.

Durch Anwendung der in Figur 10 und 11 gezeigten Methoden zur Erzeugung von geschätzten Lerndaten bleiben die im Rückkopplungsregler 70 bis zur Stabilisierung verfügbaren Daten der Rückkopplungsregelung nicht ungenutzt, so daß ein präziseres Lernen mit geschätzten Lerndaten als bei den in Figur 8 und 9 gezeigten Methoden erreicht werden kann.

Obwohl die in den Ausführungsbeispielen in Figur 8 bis 11 gezeigten Methoden zur Erzeugung von geschätzten Lerndaten separat dargelegt wurden, ist es auch möglich, diese miteinander zu kombinieren.

Der Lernregler kann zum Beispiel so konfiguriert sein, daß die geschätzten Lerndaten nach der in Figur 10 oder 11 gezeigten Methode erzeugt werden, wenn die Rückkopplungsregelung bis zum Umschlagen des Ausgabesignals der Lambdasonde durchgeführt werden konnte, ohne daß ihre Korrekturmengen konvergieren, und nach der in Figur 11 gezeigten Methode, wenn die Rückkopplungsregelung vor dem Umschlagen des Ausgabesignals der Lambdasonde abgebrochen wurde. Wenn die nach der in Figur 10 oder 11 gezeigten Methode erzeugten geschätzten Lerndaten einmal gelernt wurden, können nach der in Figur 8 und 9 gezeigten Methode geschätzte Lerndaten erzeugt werden, bis die Abweichung zwischen Modell und Regelgegenstand konvergiert.

Zudem kann die im Lernregler angewandte Methode zur Erzeugung von geschätzten Lerndaten, ohne durch dieses Ausführungsbeispiel eingeschränkt zu sein, eine beliebige Methode sein, die nach der Durchführung der Rückkopplungsregelung auf der Basis der Rückkopplungsinformation über die Regelgröße [in diesem Ausführungsbeispiel die Rückkopplungsregelungsinformation über die vor dem Konvergieren der Korrekturwerte abgebrochene Rückkopplungsregelung, die auf der Basis der Rückkopplungsinformation über die Regelgröße (zum Beispiel dem Ausgabewert der Lambdasonde) und/oder auf der Basis von Meßdaten über die Regelgröße durchgeführt wurde] in der Lage ist, die Abweichung des internen Modells vom Regelgegenstand zu schätzen und zu korrigieren.

Im vorliegenden Ausführungsbeispiel wird das Verhalten des vom Einspritzventil 4 eingespritzten Kraftstoffs in ein Haftkraftstoffverhältnis und in eine Verdunstungszeitkonstante unterteilt, um die Kraftstoffmenge mit Hilfe eines in einem unscharfen neuronalen Netz, neuronalen Netz oder CMAC modellierten Kraftstoffmengen-Vorwärtsmodells zu schätzen, doch kann die Ermittlung der Kraftstoffmenge, ohne durch dieses Ausführungsbeispiel eingeschränkt zu sein, auch mit Hilfe einer dreidimensionale Abbildung (map) der Motordrehzahl, des Drosselklappenwinkels (oder Ansaugdrucks) und der Kraftstoffmenge erfolgen, oder durch eine geeignete Funktion mit der geschätzten Luftmenge aus dem Luftmengen-Vorwärtsmodell und der optimalen Regelgröße.

Femer wird in diesem Ausführungsbeispiel zum Erhalt der Rückkopplungsdaten über die Regelgröße eine Lambdasonde verwendet, die ein binärer Sensor ist, doch kann, ohne durch dieses Ausführungsbeispiel eingeschränkt zu sein, zum Beispiel auch ein linearer Sensor verwendet werden, der das Kraftstoff/Luft-Verhältnis mißt.

In diesem Ausführungsbeispiel wird die erfindungsgemäße Lernmethode am Beispiel einer Lambdaregelung für einen Motor angewandt, doch kann diese Lernmethode, ohne durch dieses Ausführungsbeispiel eingeschränkt zu sein, auf jeden beliebigen Regelgegenstand angewandt werden, bei dem die Regelung des Regelgegenstands durch eine lernfähige Optimalwertsteuerung erfolgt, zum Beispiel bei Autostoßdämpfern, Fahrzeugen mit Elektromotor oder Verbrennungsmotor als Hilfsantrieb, elektrischen Rollstühlen, Rollstühlen mit Hilfsantrieb, Außenbordmotoren, Wasserfahrzeugen, unbemannten Helikoptern oder Personal Robots usw..

[Vorteile der Erfindung]

In einer Optimalwertsteuerung, die den Regelgegenstand durch eine lernfähige Steuerlogik modelliert und den Regelgegenstand anhand dieses Modells auf einen bestimmten Optimalwert stellt, prüft die oben beschriebene erfindungsgemäße, geschätzte Lerndaten verwendende Lernmethode, ob der Regelgegenstand sich in einem stationären Zustand befindet, und wenn er in einem stationären Zustand ist, wird die Information über die Regelgröße dieses Regelgegenstands rückgeführt, um anhand dieser Rückkopplungsinformation die Abweichung des Modells vom Regelgegenstand zu schätzen und geschätzte Lerndaten zur Korrektur dieser Abweichung zu erzeugen, die dann von der Modellsteuerlogik gelernt werden, wodurch es zur Erzeugung von Lerndaten nicht notwendig ist, wie bisher die Korrektur der Modellabweichung durch die Rückkopplungsregelung und den Erhalt dieser Korrekturdaten abzuwarten, so daß auch bei sehr kurzzeitigen stationären Zuständen des Regelgegenstands eine Lernrichtung ermöglicht wird, die die Abweichung des Modells vom Regelgegenstand verringert.

[Kurze Erläuterung der Zeichnungen]

[Figur 1] ist eine schematische Zeichnung, die die Beziehung zwischen dem Motor 1 und dem Steuergerät 10 zeigt, das mit Hilfe der erfindungsgemäßen Lernmethode die Lambdaregelung des Motors 1 durchführt.

[Figur 2] ist ein schematisches Blockdiagramm, das die Konfiguration des Steuergeräts 10 zeigt.

[Figur 3] ist ein schematisches Blockdiagramm, das die Konfiguration des modellbasierten Reglers 20 in Figur 2 zeigt.

[Figur 4] ist ein schematisches Blockdiagramm, das die Konfiguration des Kraftstoffmengen-Vorwärtsmodells 22 zeigt.

[Figur 5] ist ein schematisches Blockdiagramm, das die Konfiguration des Luftmengen-Vorwärts-modells 21 zeigt.

[Figur 6] zeigt ein Beispiel für ein hierarchisches, unscharfes neuronales Netz zur Ermittlung des Füllungsgrads, das die Motordrehzahl und den Drosselklappenwinkel als Eingabe verwendet.

[Figur 7] ist ein Flußdiagramm, das den Verarbeitungsprozeß des Lernreglers 60 und des Rückkopplungsreglers 70 zeigt.

[Figur 8] zeigt eine Methode zur Erzeugung von geschätzten Lerndaten.

[Figur 9] zeigt eine weitere Methode zur Erzeugung von geschätzten Lerndaten.

[Figur 10] (a), (b) zeigt die in einer weiteren Methode zur Erzeugung von geschätzten Lerndaten verwendeten Daten.

[Figur 11] (a), (b) zeigt die in einer weiteren Methode zur Erzeugung von geschätzten Lerndaten verwendeten Daten.

[Legende]

| 1  | Motor |
|----|-------|
| 2  | Ansaugrohr |
| 3  | Luftfilter |
| 4  | Einspritzventil |
| 5  | Zylinder |
| 6  | Auspuffkrümmer |
| 7  | Kurbelgehäuse |
| 8  | Drosselklappe |
| 10 | Steuergerät |
| 12 | Drosselklappenschalter |
| 13 | Kurbelwinkelgeber |

14      Ansaugrohrwandtemperaturfühler
15      Lambdasonde
20      modellbasierter Regler
21      Luftmengen-Vorwärtsmodell

     21a     Phasenschieber für den Drosselklappenwinkel
     21b     Prozessor zur Berechnung der Luftmenge
     21c     Druckwandler
     21d     Prozessor zur Berechnung des Ansaugdrucks
     21e     Auswerteglied für den Füllungsgrad
     21f     Phasenschieber für die Motordrehzahl

22      Kraftstoffmengen-Vorwärtsmodell

     22a     Prozessor zur Berechnung der Nichthaftkraftstoffmenge
     22b     Prozessor zur Berechnung der Haftkraftstoffmenge
     22c     Verzögerungsglied erster Ordnung
     22d     Verzögerungsglied erster Ordnung
     22e     Auswerteglied für das Haftkraftstoffverhältnis
     22f     Auswerteglied für die Verdampfungszeitkonstante

23      Prozessor zur Berechnung der geschätzten Regelgröße
24      Prozessor zur Berechnung der Basisstellgröße
30      Prozessor zur Berechnung der optimalen Regelgröße
40      Drehzahlprozessor
50      Wandler
60      Lernregler
70      Rückkopplungsregler

x1      Motordrehzahl
x2      Drosselklappenwinkel
Te      Ansaugrohrwandtemperatur
E       Regelgröße
Ep      optimale Regelgröße
Ev      geschätzte Regelgröße
Mf      Stellgröße
Fa      geschätzte Lerndaten
Fb      Korrekturwert der Rückkopplungsregelung (Basis der Lerndaten)
Av      geschätzte Luftmenge
Fv      geschätzte Kraftstoffmenge
$\eta v$     geschätzter Füllungsgrad
$\eta v'$    korrigierter geschätzter Füllungsgrad (Lemdaten)
rv      geschätztes Haftkraftstoffverhältnis
$\tau v$     geschätzte Verdunstungszeitkonstante

**Patentansprüche**

**1.** Steuervorrichtung für eine Brennkraftmaschine (1), umfassend:

     eine Steuerlogik (20) zur Modellierung des Verhaltens der Brennkraftmaschine (1) und

     eine Rückkopplungseinrichtung (70), die einen Ist-Zustand der Brennkraftmaschine (1) erfasst,

     **dadurch gekennzeichnet, dass**
die Rückkopplungseinrichtung (70) Lerndaten (Fb) für eine Korrektur der Modellierung basierend auf einer Abweichung der Modellierung von dem erfassten Ist-Zustand während eines stabilen Betriebszustands der Brennkraftmaschine (1) erzeugt und

die Steuervorrichtung außerdem einen Lernregler (60) zur Erzeugung von geschätzten Lerndaten (Fa) für die Korrektur der Modellierung, wenn die Brennkraftmaschine (1) den stabilen Betriebszustand verlassen hat, umfasst.

2. Steuervorrichtung nach Anspruch 1, wobei die Steuervorrichtung das Kraftstoff/Luft-Verhältnis durch Variation der Menge des zugeführten Kraftstoffs in Abhängigkeit von den Betriebsbedingungen der Brennkraftmaschine (1) einstellt.

3. Steuervorrichtung nach Anspruch 2, wobei die Steuerlogik (20) ein Luftmengenmodell (21), eine Kraftstoffmengenmodell (22) und eine Recheneinheit (23) zur Ermittlung eines geschätzten Kraftstoff/Luft-Verhältnisses ($E_v$) aufweist und zumindest das Luftmengenmodell (21) oder das Kraftstoffmengenmodell (22) durch Lemdaten (Fa, Fb) korrigierbar ist.

4. Steuervorrichtung nach Anspruch 3, wobei das Luftmengenmodell (21) und das Kraftstoffmengenmodell (22) als durch Lemdaten (Fa, Fb) korrigierbare Vorwärtsmodelle ausgebildet sind.

5. Steuervorrichtung nach Anspruch 3 oder 4, wobei die Recheneinheit (23) ein geschätztes Kraftstoff/Luft-Verhältnis ($E_v$) basierend auf der von dem Luftmengenmodell (21) geschätzten Luftmenge und der von dem Kraftstoffmengenmodell (22) geschätzten Kraftstoffmenge ermittelt.

6. Steuervorrichtung nach einem der Ansprüche 1 bis 5, die zusätzlich einen Prozessor (24) zur Berechnung einer Basis-Kraftstoffeinspritzmenge ($M_{fn}$) basierend auf dem Vergleich eines Soll-Kraftstoff/Luft-Verhältnisses ($E_p$) mit dem über die Modellierung geschätzten Kraftstoff/Luft-Verhältnisses ($E_v$) umfasst.

7. Steuervorrichtung nach einem der Ansprüche 1 bis 6, die zusätzlich einen Sollwertgeber (30) zur Berechnung eines Sollwerts (Ep) für eine optimale Kraftstoffeinspritzmenge in Abhängigkeit von den Betriebsbedingungen der Brennkraftmaschine (1) umfasst.

8. Steuervorrichtung nach einem der Ansprüche 1 bis 7, wobei der Steuervorrichtung als Eingangssignale Signale von einem Drosselklappensensor (12), einem Ansaugkanalwand-Temperatursensor (14), einem Kurbelwinkelsensor (13) und einem Sauerstoffsensor (15) im Abgaskanal (6) erhält.

9. Steuervorrichtung nach einem der Ansprüche 4 bis 8, wobei das Kraftstoffmengen-Vorwärtsmodell (22) und das Luftmengen-Vorwärtsmodell (21) fuzzy-neuronale Netzwerke enthalten.

10. Verfahren zur Steuerung einer Brennkraftmaschine (1) über eine Bestimmung eines Steuerparameters (Mf) durch eine Steuerlogik (20), die das Verhalten der Brennkraftmaschine (1) modelliert, **gekennzeichnet durch** die Schritte:

Feststellen (Schritt 2) eines stabilen Betriebszustands der Brennkraftmaschine (1),

Starten (Schritt 4) einer Rückkopplungskorrektur der Modellierung über eine Erzeugung von Lemdaten (Fb) basierend auf einer Abweichung der Modellierung von einem erfassten Ist-Zustand der Brennkraftmaschine (1), wenn ein stabiler Betriebszustand der Brennkraftmaschine (1) festgestellt wird, und

Erzeugen (Schritt 10) von geschätzten Lemdaten (Fa) zur Korrektur der Modellierung, wenn festgestellt wird (Schritt 5), dass die Brennkraftmaschine (1) den stabilen Betriebszustand verlässt.

11. Verfahren nach Anspruch 10, wobei der stabile Betriebszustand erkannt wird, wenn der Betriebszustand der Brennkraftmaschine (1) für einen vorgegebenen Zeitraum in einem stabilen Betriebszustand verbleibt.

12. Verfahren nach Anspruch 10 oder 11, wobei ein Konvergenzzustand der Abweichung der Modellierung vom Ist-Zustand der Brennkraftmaschine (1) anhand der "Lernrichtung" zumindest der in einem vorhergehenden Zyklus geschätzten Lemdaten (Fa) abgeschätzt wird, um basierend auf der Abschätzung des Konvergenzzustandes und der Erfassung des stabilen Betriebszustandes neue geschätzte Lemdaten (Fa) zur Korrektur der Modellierung zu erzeugen.

13. Verfahren nach einem der Ansprüche 10 bis 12, wobei die Abweichung der Modellierung von dem Ist-Zustand basierend auf einem erfassten Rückkopplungsparameter (E) geschätzt wird.

**14.** Verfahren nach Anspruch 13, wobei die geschätzten Lerndaten (Fa) basierend auf der Zeitdauer erzeugt werden, die die vom Start der Rückkopplungskorrektur bis zu ihrem Abbruch verstrichene Zeit angibt, wenn der erfasste Rückkopplungsparameter (E) bis zum Abbruch einen vorgegebenen Grenzwert nicht erreicht hat, oder

basierend auf der Zeitdauer, die die vom Start der Rückkopplungskorrektur bis zu dem Zeitpunkt verstrichene Zeit angibt, bei dem der erfasste Rückkopplungsparameter (E) den vorgegebenen Grenzwert erreicht oder überschritten hat, wenn der Rückkopplungsparameter (E) den vorgegebenen Grenzwert bis zum Abbruch mindestens einmal erreicht oder überschreitet.

**15.** Verfahren nach Anspruch 14, wobei als Repräsentant der Zeit die Korrekturmenge verwendet wird.

**16.** Verfahren nach einem der Ansprüche 13 bis 15, wobei die Lemdaten (Fb) in Abhängigkeit davon erzeugt werden, ob ein erfasste Rückkopplungsparameter (E) größer oder kleiner als ein Optimalwert ist.

**Claims**

**1.** Control device for an internal combustion engine (1), comprising:

control electronics (20) for modelling the behaviour of the internal combustion engine (1)

a feedback device (70), which detects an actual state of the internal combustion engine (1)

**characterised in that**
the feedback device (70) generates learning data (Fb) for adjustment of the model based on deviation of the modelling from the detected actual state during a stable operating state of the internal combustion engine (1) and the control device further comprises a learning adjuster (60) for generating estimated learning data (Fa) for adjusting the modelling if the internal combustion engine (1) has left the stabile operating state.

**2.** Control device according to claim 1, wherein the control device sets the fuel/air ratio by varying the quantity of fuel supplied according to the operating conditions of the internal combustion engine (1).

**3.** Control device according to claim 2, wherein the control electronics (20) has an air-quantity model (21), a fuel-quantity model (22) and a calculating unit (23) for determining an estimated fuel/air ratio ($E_v$) and at least the air-quantity model (21) or the fuel-quantity model (22) is adjustable by learning data (Fa, Tb).

**4.** Control device according to claim 3, wherein the air-quantity model (21) and the fuel-quantity model (22) take the form of forward models adjustable by learning data (Fa, Fb).

**5.** Control device according to claim 3 or 4, wherein the calculating unit (23) determines an estimated fuel/air ratio ($E_v$) based on the air quantity estimated by the air-quantity model (21) and the fuel quantity estimated by the fuel-quantity model (22).

**6.** Control device according to one of claims 1 to 5, which additionally comprises a processor (24) for calculating a base fuel injection quantity ($M_{fn}$) based on the comparison of a set point fuel/air ratio ($E_p$) with the fuel/air ratio ($E_v$) estimated via modelling.

**7.** Control device according to one of claims 1 to 6, which additionally comprises a set point generator (30) for calculating a set point value (Ep) for optimum fuel injection quantity according to the operating conditions of the internal combustion engine (1).

**8.** Control device according to one of claims 1 to 7, wherein the control device receives, as input signals, signals from a choke valve sensor (12), an intake channel wall temperature sensor (14), a crank angle sensor (13), and an oxygen sensor (15) in the exhaust channel (6).

**9.** Control device according to one of claims 4 to 8, wherein the oxygen quantity forward model (22) and the air-quantity forward model (21) contain fuzzy-neuronal networks.

**10.** Method of controlling an internal combustion engine (1) by determining a control parameter (Mf) by means of control electronics (20), which model the behaviour of the internal combustion engine (1), **characterised by** the steps

Setting (step 2) of a stable operating state of the internal combustion engine (1),

Starting (step 4) of a feedback adjustment of the modelling by generating learning data (Fb) based on deviation of the modelling from a detected actual state of the internal combustion engine (1) when a stable operating state of the internal combustion engine (1) is detected, and

Generation (step 10) of estimated learning data (Fa) for adjusting the modelling if it is established (step 5) that the internal combustion engine (1) is leaving the stable operating state.

**11.** Method according to claim 10, wherein the stable operating state is detected when the operating state of the internal combustion engine (1) remains in a stable state for a specified period.

**12.** Method according to claim 10 or 11, wherein a convergence state of the deviation of modelling from the actual state of the internal combustion engine (1) is estimated by means of the "learning direction" at least of the learning data (Fa) estimated in a preceding cycle in order to generate new estimated learning data (Fa) for adjusting the modelling, based on the estimate of the convergence state and the detection of the stable operating state.

**13.** Method according to one of claims 10 to 12, wherein deviation of the modelling from the actual state is estimated based on a detected feedback parameter (E).

**14.** Method according to claim 13, wherein the estimated learning data (Fa)
are generated based on the time duration which indicates the time elapsed from the start of feedback adjustment to where it breaks off, if the detected feedback parameter (E) has not reached a specified limit value up to the break-off point, or
based on the duration which indicates the time elapsed from the start of feedback adjustment up to the moment when the detected feedback parameter (E) has reached or exceeded the specified limit value, if the feedback parameter (E) should at least once reach or exceed the specified limit value up to the break-off point.

**15.** Method according to claim 14, wherein the adjustment quantity is used to represent the time.

**16.** Method according to one of claims 13 to 15, wherein the learning data (Fb) are generated according to whether a detected feedback parameter (E) is greater or less than an optimum value.


**Revendications**

**1.** Dispositif de commande d'un moteur à combustion interne (1), comprenant :

une logique de commande (20) destinée à la modélisation du comportement du moteur à combustion interne (1) et
un dispositif de rétroaction (70), qui détecte un état réel du moteur à combustion interne (1),

**caractérisé en ce que**
le dispositif de rétroaction (70) crée des données d'apprentissage (Fb) pour une correction de la modélisation en se basant sur un écart entre la modélisation et l'état réel détecté pendant un état de marche stable du moteur à combustion interne (1) et
le dispositif de commande comprend en outre un régulateur d'apprentissage (60) destiné à créer des données d'apprentissage (Fa) estimées pour la correction de la modélisation, lorsque le moteur à combustion interne (1) a quitté l'état de marche stable.

**2.** Dispositif de commande selon la revendication 1, dans lequel le dispositif de commande règle le rapport carburant/air en variant la quantité du carburant amené en fonction des conditions de marche du moteur à combustion interne (1).

3. Dispositif de commande selon la revendication 2, dans lequel la logique de commande (20) comprend un modèle de volume d'air (21), un modèle de quantité de carburant (22) et un compteur totaliseur (23) permettant de déterminer un rapport carburant/air ($E_v$) estimé et au moins le modèle de volume d'air (21) ou le modèle de quantité de carburant (22) peut être corrigé par les données d'apprentissage (Fa, Fb).

4. Dispositif de commande selon la revendication 3, dans lequel le modèle de volume d'air (21) et le modèle de quantité de carburant (22) sont réalisés comme des modèles de prévision pouvant être corrigés par les données d'apprentissage (Fa, Fb).

5. Dispositif de commande selon la revendication 3 ou 4, dans lequel le compteur totaliseur (23) détermine un rapport carburant/air ($E_v$) estimé en se basant sur le volume d'air estimé par le modèle de volume d'air (21) et la quantité de carburant estimée par le modèle de quantité de carburant (22).

6. Dispositif de commande selon l'une des revendications 1 à 5, qui comprend en outre un processeur (24) destiné à calculer une quantité d'injection de carburant de base ($M_{fn}$) en se basant. sur la comparaison entre un rapport carburant/air théorique ($E_p$) et le rapport carburant/air ($E_v$) estimé par l'intermédiaire de la modélisation.

7. Dispositif de commande selon l'une des revendications 1 à 6, qui comprend en outre un indicateur de valeur théorique (30) destiné à calculer une valeur théorique ($E_p$) d'une quantité d'injection de carburant optimale en fonction des conditions de marche du moteur à combustion interne (1).

8. Dispositif de commande selon l'une des revendications 1 à 7, dans lequel le dispositif de commande reçoit comme signaux de départ des signaux provenant d'un capteur de vanne d'étranglement (12), d'un capteur de température de la paroi du canal d'aspiration (14), d'un capteur d'angle de vilebrequin et d'un capteur d'oxygène (15) dans le canal des gaz d'échappement (6).

9. Dispositif de commande selon l'une des revendications 4 à 8, dans lequel dans le modèle de prévision de la quantité de carburant (22) et le modèle de prévision du volume d'air (21) contiennent des réseaux neuronaux flous.

10. Procédé de commande d'un moteur à combustion interne (1) en déterminant un paramètre de commande (Mf) par l'intermédiaire d'une logique de commande (20), qui modélise le comportement du moteur à combustion interne (1), **caractérisé par** les étapes de :

constatation (étape 2) d'un état de marche stable du moteur à combustion interne (1),
démarrage (étape 4) d'une correction de rétroaction de la modélisation en créant des données d'apprentissage (Fb) en se basant sur un écart entre la modélisation et un état réel détecté du moteur à combustion interne (1), lorsqu'un état de marche stable du moteur à combustion interne (1) est constaté, et
création (étape 10) de données d'apprentissage (Fa) estimées pour corriger la modélisation, lorsqu'on constate (étape 5) que le moteur à combustion interne (1) quitte l'état de marche stable.

11. Procédé selon la revendication 10, dans lequel l'état de marche stable est détecté lorsque l'état de marche du moteur à combustion interne (1) reste pendant une durée prédéterminée dans un état de marche stable.

12. Procédé selon la revendication 10 ou 11, dans lequel un état de convergence de l'écart entre la modélisation et l'état réel du moteur à combustion interne (1) est évalué en s'appuyant sur « la direction d'apprentissage » d'au moins les données d'apprentissage (Fa) estimées lors d'un précédent cycle, afin de créer de nouvelles données d'apprentissage (Fa) estimées pour corriger la modélisation en se basant sur l'évaluation de l'état de convergence et la détection de l'état de marche stable.

13. Procédé selon l'une des revendications 10 à 12, dans lequel l'écart entre la modélisation et l'état réel est estimé en se basant sur un paramètre de rétroaction (E) détecté.

14. Procédé selon la revendication 13, dans lequel les données d'apprentissage (Fa) estimées
sont crées en se basant sur la durée qui indique le laps de temps écoulé entre le démarrage de la correction de rétroaction et l'arrêt de celle-ci, lorsque le paramètre de rétroaction (E) détecté jusqu'à l'arrêt n'a pas atteint une valeur limite prédéterminée, ou
en se basant sur la durée qui indique le laps de temps écoulé entre le démarrage de la correction de rétroaction et le moment où le paramètre de rétroaction (E) détecté a atteint ou dépassé la valeur limite prédéterminée, lorsque le paramètre de rétroaction (E) a atteint ou dépassé au moins une fois la valeur limite prédéterminée jusqu'à l'arrêt.

15. Procédé selon la revendication 14, dans lequel la quantité de correction est utilisée comme représentant de la durée.

16. Procédé selon l'une des revendications 13 à 15, dans lequel les données d'apprentissage (Fb) sont créées en fonction du fait qu'un paramètre de rétroaction (E) détecté est supérieur ou inférieur à une valeur optimale.

Fig. 1

# Fig. 2

Ansaugrohrwandtemperaturfühler

Kurbelwinkelgeber

Prozessor zur Berechnung
der optimalen Regelgröße

14

Drosselklappenschalter  12   x 2

13

Drehzahlprozessor  x 1
4 0

30

Lernregler
6 0

Te

Steuergerät  1 0

modellbasierter
Regler 2 0

E p

F a

F b

Rückkopplungsregler  7 0

Mf n   Wandler
5 0

Motor  1

Mf

E

EP 0 936 351 B1

# Fig. 3

modellbasierter Regler 2 0

F b    F a

Motordrehzahl x 1 → Luftmengen-Vorwärtsmodell 2 1    A v

Drosselklappenwinkel x 2

Ansaugrohrwandtemperatur T a

E p (Sollwert)

24    Mf n

Kraftstoffmengen-Vorwärtsmodell 2 2    F v    2 3

Prozessor zur Berechnung der geschätzten Regelgröße

E y (abgeschätzter Wert)

Basisstellgröße Mfn

Prozessor zur Berechnung der Basisstellgröße

# Fig. 4

Auswerteglied für die Verdampfungszeitkonstante

Kraftstoffmengen-Vorwärtsmodell ,2 2

Ansaugrohrwandtemperatur $T_e$

Motordrehzahl $x1$

Drosselklappenwinkel $x2$

$22f$

$\tau$

Auswerteglied für das Haftkraftstoffverhältnis

$22e$

$r$  Prozessor zur Berechnung der Nichthaftkraftstoffmenge

Basisstellgröße Mfn

Phasenverzögerungsglied $22g$

$22a$ $(1-x)$

$r$

Verzögerungsglied erster Ordnung 22c $\left(\dfrac{1}{1+\tau1s}\right)$

$\tau$

geschätzte Kraftstoffmenge $F_v$

$22b$ $(x)$

$22d$ $\left(\dfrac{1}{1+\tau2s}\right)$

Prozessor zur Berechnung der Haftkraftstoffmenge

Verzögerungsglied erster Ordnung

EP 0 936 351 B1

# Fig. 5

Av geschätzte Luftmenge

**Luftmengen-Vorwärtsmodell  2 1**

Phasenschieber für den Drosselklappenwinkel

Prozessor zur Berechnung der Luftmenge

Prozessor zur Berechnung des Ansaugdrucks

Druckwandler

Drosselklappenwinkel α

2 1 a

2 1 b

Av

2 1 c

2 1 d

P man

Bestimmung der Zeitkonstante

Motordrehzahl n

2 1 f

Auswerteglied für den Füllungsgrad

2 1 e

η

Phasenschieber für die Motordrehzahl

F b

F a   geschätzte Lerndaten

Korrekturwert der Rückkopplungsregelung (Basis der Lerndaten)

EP 0 936 351 B1

Fig. 6

START

Schritt 1:

NO

$\Delta x1 < 300$ U/min und $\Delta x2 < 1°$ ?

YES    Schritt 2:

NO

Hält der stabile Zustand mehr als
2 Sekunden an?

YES    Schritt 3:

E/Grev, THL und Ausgabe der
Lamdasonde speichern.

Schritt 4:

Rückkopplungsregelung starten.

Schritt 5:

$\Delta x1 < 300$ U/min und $\Delta x2 < 1°$ ?

NO

YES    Schritt 6:

NO

Ist das Rückkopplungssignal der
Lamdasonde stabil?

Aus den gespeicherten
Daten Lerndaten
erstellen.

YES    Schritt 7:

Schritt 10:

Lerndaten gewinnen.

Rückkopplungs
regelung abbrechen

Schritt 8:

Lernen.    Schritt 9:

**Fig. 7**

23

**Fig. 8**

Wenn zwei mal hintereinander in gleicher Richtung gelernt wurde, ohne daß die Regelabweichung konvergiert, wird der Lernschritt vergrößert.

Wenn die Lernrichtung umgekehrt werden mußte und die Regelabweichung konvergiert, wird der Lernschritt verkleinert.

Reduktion um 1%

Reduktion um 1%

Lerndaten

Reduktion um 2%

Reduktion um 3%

Reduktion um 4%

Erhöhung um 1%

Reduktion um 1%

Erhöhung um 1%

Erhöhung um 1%

Erhöhung um 2%

Optimalwert

Lernen konvergiert nicht ←   → Lernen konvergiert ←   → Lernen konvergiert nicht

Die Lernweite wird von der Lernrichtung in der Vergangenheit abhängig bestimmt

EP 0 936 351 B1

## Fig. 9

Wenn zwei mal hintereinander in gleicher Richtung gelernt wurde, ohne daß die Regelabweichung konvergiert, wird der Lernschritt vergrößert.

Wenn die Lernrichtung umgekehrt werden mußte und die Regelabweichung konvergiert, wird der Lernschritt verkleinert.

Reduktion um 1%.

Reduktion um 1%

Lerndaten

Erhöhung um 5%

Reduktion um 5%

Reduktion um 4%

Erhöhung um 4%

Erhöhung um 2%

Erhöhung um 1%

Reduktion um 1%

Erhöhung um 1%

Erhöhung um 1%

Optimalwert

Reduktion um 5%

Reduktion um 3%

Die Lernweite wird von der Lernrichtung in der Vergangenheit abhängig bestimmt

EP 0 936 351 B1

(a)    Bei großer Regelabweichung

(b)    Bei kleiner Regelabweichung

Verhältnis zwischen der Fortsetzungsdauer der Rückkopplungsregelung und dem Konvergenzzustand des Lernens

**Fig. 10**

**(a)  Bei großer Regelabweichung**

transienter Zustand →  ← stationärer Zustand  →  ← transienter Zustand

E/Grev

THL

Füllungsgrad  ← 2 Sek. lang → ← Start der Rückkopplungsregelung →

Nach einem Sprung am Anfang wird der Optimalwert schnell genähert.

Diese Menge ist groß.

Optimalwert

**(b)  Bei kleiner Regelabweichung**

transienter Zustand →  ← stationärer Zustand →  ← transienter Zustand

E/Grev

THL

Füllungsgrad  ← 2 Sek. lang → ← Start der Rückkopplungsregelung →

Nach einem Sprung am Anfang wird der Optimalwert schnell genähert.

Diese Menge ist klein.

Optimalwert

Verhältnis zwischen der Korrekturmenge der Rückkopplungsregelung und dem Konvergenzzustand des Lernens

## Fig. 11